Europäisches Patentamt

European Patent Office

Office européen des brevets

(19)

(11) Veröffentlichungsnummer: **0 262 308**
**A2**

# (12) EUROPÄISCHE PATENTANMELDUNG

(21) Anmeldenummer: 87109048.6

(22) Anmeldetag: 24.06.87

(51) Int. Cl.⁴: **G01K 7/00** , G01K 1/00

Die Bezeichnung der Erfindung wurde geändert (Richtlinien für die Prüfung im EPA, A-III, 7.3).

(30) Priorität: 10.07.86 DE 8618463 U

(43) Veröffentlichungstag der Anmeldung:
06.04.88 Patentblatt 88/14

(84) Benannte Vertragsstaaten:
AT BE CH DE ES FR GB GR IT LI LU NL SE

(71) Anmelder: **Abonyi, Gabrielle**
**In den Eichgärten 35**
**D-6338 Hüttenberg-Rechtenbach(DE)**

(72) Erfinder: **Abonyi, Stephan**
**In den Eichgärten 35**
**D-6338 Hüttenberg-Rechtenbach(DE)**

(74) Vertreter: **Schlagwein, Udo, Dipl.-Ing.**
**Anwaltsbüro Ruppert & Schlagwein**
**Bahnhofsallee 11**
**D-6350 Bad Nauheim(DE)**

(54) **Elektrischer Temperaturmessfühler.**

(57) Ein Meßfühler (10) für die elektrische Messung von Temperaturen hat an seiner Fühlerspitze einen Temperaturfühler (12) und innerhalb des Fühlerkopfes einen Sekundärfühler (22), der die Hintergrundtemperatur ständig mißt. Dadurch braucht bei der Temperaturmessung der Temperaturfühler (12) nur den Temperaturunterschied zu dieser Hintergrundtemperatur zu messen, wodurch der Meßfühler ganz besonders rasch mißt und sehr genaue Temperaturwerte liefert.

Fig. 1

EP 0 262 308 A2

## Meßfühler

Die Erfindung betrifft einen Meßfühler für die elektrische Messung von Temperaturen mit einem Temperaturfühler an der Fühlerspitze.

Meßfühler dieser Art sind allgemein bekannt und gebräuch lich. Sie können beispielsweise zum Messen der Temperatur eines Gases oder einer Flüssigkeit, aber auch zum Messen der Oberfläche eines Objektes durch punktuellen oder kleinflächigen Kontakt mit der Oberfläche des zu messenden Objektes ausgebildet sein.

Zur Direktmessung der Temperatur bringt man den Meßfühler in engen, thermischen Kontakt mit dem Meßobjekt. Dann wartet man den Temperaturausgleich ab, der zwangsläufig einen Wärmeübergang bedingt. Vielfach ist es sehr wichtig, daß der Meßfühler dem Meßobjekt möglichst wenig Wärme entzieht, weil sonst dessen Temperatur verändert würde. Deshalb soll der Meßfühler eine möglichst kleine Eigenmasse und dadurch eine geringe Wärmekapazität haben, was beispielsweise bei Thermoelementen der Fall ist. Meßfehler treten bei solchen Thermoelementen allerdings dadurch auf, daß Befestigungsteile für das Thermoelement, die dieses in einer Halterung fixieren, Wärme vom Thermoelement weg oder zu ihm hin leiten und diese Wärmeleitung nicht gleichmäßig ist, sondern von verschiedenen Umgebungsbedingungen abhängt. Die Temperaturanzeige wird mithin nicht nur von der Temperatur des Meßobjektes, sondern auch von der sogenannten Hintergrundtemperatur des Meßfühlers beeinflußt.

Der Erfindung liegt die Aufgabe zugrunde, einen Meßfühler der eingangs genannten Art derart zu gestalten, daß mit möglichst einfachen Mitteln die Hintergrundtemperatur keinen Einfluß auf das Meßergebnis ausübt.

Diese Aufgabe wird erfindungsgemäß auf überraschend einfache Weise dadurch gelöst, daß dem Temperaturfühler ein Sekundärfühler zur Messung der Hintergrundtemperatur zugeordnet ist.

Durch diese Ausbildung wird erreicht, daß der Einfluß der Hintergrundtemperatur in einer Auswertelektronik erfaßt und damit ausgeglichen werden kann. Deshalb können mit dem erfindungsgemäßen Meßfühler Temperaturen mit besonders hoher Genauigkeit ermittelt werden, ohne daß hierzu der Meßfühler aufwendig aufgebaut sein muß. Der Sekundärfühler mißt ständig die Hintergrundtemperatur, so daß der eigentliche Temperaturfühler nur noch den Unterschied zu dieser Hintergrundtemperatur messen muß. Dabei ist die thermische Trägheit klein, weil im wesentlichen nur die recht geringe Masse des eigentlichen Temperaturfühlers die Temperatur des Meßobjektes annehmen muß. Ganz besonders gut eignet sich der erfindungsgemäße Meßfühler zum Messen der Oberfläche eines Körpers, insbesondere der menschlichen Haut, da er in sehr kurzer Zeit einen genauen Meßwert liefert. Andere Anwendungsgebiete sind die Bestimmung der Luftfeuchte und Luftgeschwindigkeit durch Temperaturmessung.

Ein ganz besonders kompakter, robuster und flink messender Meßfühler entsteht, wenn gemäß einer vorteilhaften Ausgestaltung der Erfindung der Temperaturfühler mit einer ihn tragenden Isolierung und dem Sekundärfühler eine Baueinheit bildet.

Der Sekundärfühler kann zum Beispiel ein Widerstandsthermometer sein. Vorteilhaft ist dabei die Ausbildung dieses Widerstandsthermometers als Widerstandsperle. Die Isolierung, welche den Temperaturfühler trägt, wird man zweckmäßigerweise sehr dünn ausbilden, damit der Wärmedurchgang möglichst wenig behindert wird. In der Praxis kommen sehr dünne Isolierscheiben oder Isolierfilme in Betracht, beispielsweise aus Polymeren wie Polystyrol, Polyethylenterephthalat und dergleichen.

Eine vorteilhafte Ausgestaltung der Erfindung besteht darin, daß der Bezugskörper als massiver Wärmeleitkörper ausgebildet ist, so daß nicht nur übergehende Wärme rasch abgeleitet und verteilt, sondern auch das Temperaturgefälle zum Meßobjekt aufrechterhalten wird. Das trägt entscheidend dazu bei, daß die Meßzeiten insgesamt kurz sind und der Meßwert-Beharrungszustand - schnell erreicht wird. Hierbei ist es günstig, wenn der Senkundärfühler nahe der Stirnfläche des Bezugskörpers an oder in ihm wärmeleitend verankert und der Bezugswert mithin nach Art eines "Umgebungsnormals" weitgehend festgelegt ist.

Der Temperaturfühler ist vorteilhafterweise ein Thermoelement, dessen eine Lötstelle den Meßpunkt an der Fühlerspitze bildet, während die andere Lötstelle an dem Bezugskörper sitzt und vorzugsweise mit ihm verlötet ist. Die Wärmekapazität eines solchen Temperaturfühlers, der insgesamt sehr klein sein kann, ist entsprechend gering; infolgedessen folgt der Temperaturfühler den am Objekt zu messenden Temperaturen äußerst schnell, z.B. im Zehntelsekundenbereich.

Vorteilhaft ist es auch, wenn gemäß einer anderen Ausgestaltung der Erfindung dem Temperaturfühler außen eine von der Hülse gehaltene Kontaktscheibe vorgeordnet ist. Durch diese Kontaktscheibe kann der Meßfühler an der Oberfläche des Meßobjektes satt anliegen und den spezifischen Andruck, also die wirksame Flächenpressung, herabsetzen. Bevorzugt ist dies eine Isolierscheibe oder Isolierschicht, z.B. aus einer geeigneten Folie von geringer Wärmekapazität.

Für die punktuelle Messung der Oberfläche der Haut ist es vorteilhaft, wenn der Temperaturfühler eine ein Thermoelement bildende Schleife aus Thermodraht ist, welche zum Kontaktieren einer zu messenden Oberfläche auf einem eine Luftströmung zulassenden Träger angeordnet ist.

Im Gegensatz zu einer Kontaktscheibe behindert ein solcher Träger nicht die Luftströmung oder Wärmestrahlung vom Meßobjekt zum vom Temperaturfühler weggeführten Thermodraht, der sich dadurch rasch erwärmt, was im Zusammenhang mit der erfindungsgemäßen Bestimmung der Hintergrundtemperatur rasch zu einem exakten Meßwert führt.

Der Meßfühler vermag ganz besonders rasch Oberflächentemperaturen zu messen und entzieht dem Meßobjekt nur eine äußerst geringe Wärmemenge, wenn gemäß einer anderen, vorteilhaften Ausgestaltung der Erfindung der Träger ein Gitter aus elektrisch isolierendem Material ist, welches die vordere Stirnfläche eines einen Fühlerkopf bildenden Rohrkörpers abdeckt, der Durchlässe in seiner Mantelfläche hat. Die Masse eines solchen Temperaturfühlers kann sehr gering sein, so daß er bei der Messung wenig Wärme aufnimmt und deshalb rasch anspricht. Der Temperaturfühler gemäß dieser Ausgestaltung eignet sich ganz besonders zur rasch aufeinanderfolgenden Messung der Temperatur der Hautoberfläche des Menschen an verschiedenen Stellen.

Der Sekundärfühler ist gut belüftet, so daß er stets die Raumtemperatur aufweist, wenn er in dem Rohrkörper unmittelbar hinter dem Träger angeordnet ist. Dadurch, daß sich der Temperaturfühler auf einem Gitter befindet und der Rohrkörper Durchlässe hat, kommt es beim Abheben des Meßfühlers von der zu messenden Fläche zu einem Luftstrom durch den Rohrkörper und dadurch zu einer raschen Abkühlung des Inneren des Meßfühlers.

Eine besonders kostengünstig herzustellende Ausführungsform besteht darin, daß der Sekundärfühler ein PT 100-Element ist, welches an einer Seite mit einem der beiden Thermodrähte des als Thermoelement ausgebildeten Temperaturfühlers und an seiner anderen Seite mit einer zu einer Auswertelektronik führenden Leitung verbunden ist.

Der Sekundärfühler wird besonders gut gekühlt, wenn der Rohrkörper im Bereich des Sekundärfühlers in seiner Mantelfläche mehrere kleinflächige Durchlässe und im rückwärtigen Bereich mehrere großflächige Durchlässe in Form von Langlöchern aufweist.

Weitere Merkmale, Einzelheiten und Vorteile der Erfindung ergeben sich aus dem Wortlaut der Ansprüche sowie der folgenden Beschreibung von Ausführungsbeispielen anhand der Zeichnung. In ihr zeigen:

Fig. 1 einen schematisierten Längsschnitt durch einen erfindungsgemäßen Meßfühler,

Fig. 2 eine ebenfalls schematisierte Seitenansicht einer abgewandelten Ausführungsform,

Fig. 3 eine teilweise im Schnitt dargestellte Seitenansicht einer weiteren Ausführungsform,

Fig. 4 eine Teilansicht eines Verwendungsbeispiels,

Fig. 5 eine Seitenansicht einer vollständigen Meßeinrichtung mit einer weiteren Ausführungsform des erfindungsgemäßen Meßfühlers,

Fig. 6 einen Blick auf die vordere Stirnfläche des Meßfühlers nach Figur 5,

Fig. 7 einen Schnitt durch den vorderen Bereich des Meßfühlers nach den Figuren 5 und 6,

Fig. 8 eine schematische Darstellung der Anordnung eines Sekundärfühlers des Meßfühlers gemäß den Figuren 5 bis 7.

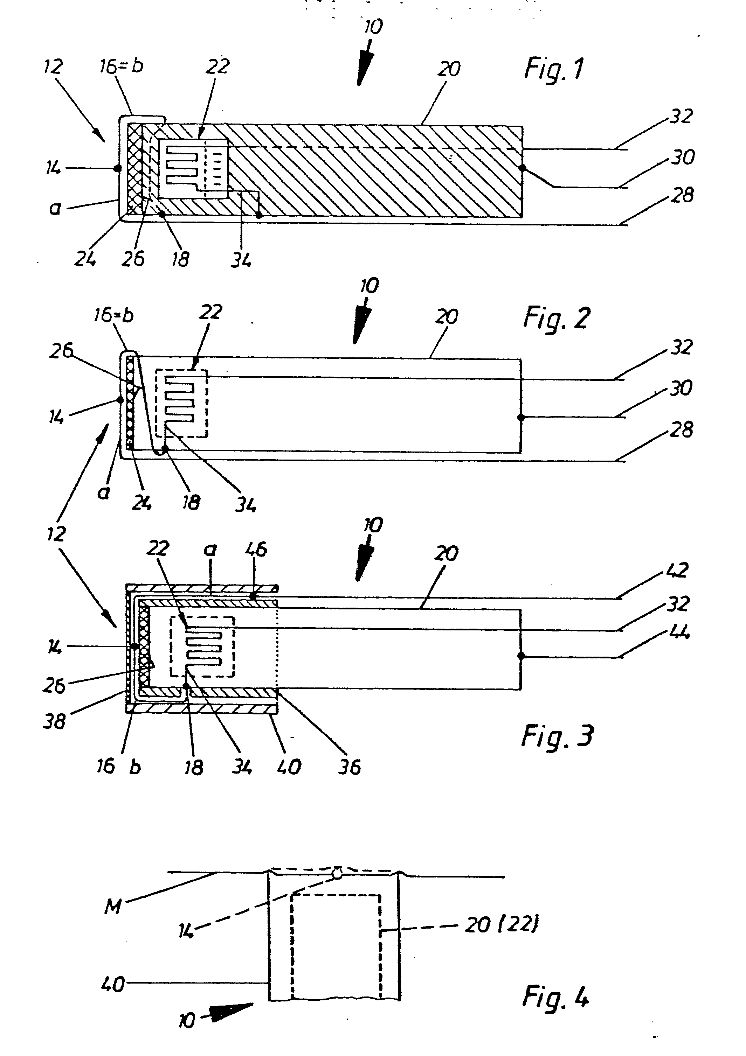

Wie aus den Figuren 1 bis 3 ersichtlich, besteht der insgesamt mit 10 bezeichnete Meßfühler aus einem primären Temperaturfühler 12, einer Isolierung 24 und einem Bezugskörper 20, die miteinander zu einer festen Baueinheit verbunden sind. Während der Temperaturfühler 12 auch eine nicht dargestellte Widerstandsperle sein kann, ist er in den gezeichneten Ausführungsformen ein Thermoelement mit Leitungen a, b aus unterschiedlichen Werkstoffen, beispielsweise einem lackierten Thermodraht, etwa aus einer Cu-Cr-Ni-Legierung einerseits und einem lackierten Kupferdraht andererseits, die an einer Lötstelle I als Meßpunkt 14 miteinander verbunden sind. Der Kupferdraht a führt vom Meßpunkt 14 zur Anschlußseite des Meßfühlers 10, wobei er selbst einen Anschlußdraht 28 bilden kann. Ein weiterer, bevorzugt ebenfalls aus Kupfer bestehender Anschlußdraht 30 ist am Ende des Bezugskörpers 20 mit diesem verlötet. Auch letzterer besteht bevorzugt aus Kupfer.

Die Leitung b bildet das Verbindungsstück 16 vom Meßpunkt 14 zu einem Bezugspunkt 18, welcher die Lötstelle II des Temperaturfühlers 12 am Bezugskörper 20 darstellt. Dieses Verbindungsstück 16 ist insbesondere eine Drahtwindung, die das meßpunktseitige Ende des Bezugskörpers 20 am Umfang wenigstens teilweise umschließt.

Zwischen der Stirnfläche 26 des Bezugskörpers 20 und dem Meßpunkt 14 befindet sich die Isolierung 24, die bevorzugt eine an der Stirnfläche 26 befestigte, z.B. mit ihr verklebte, dünne Scheibe oder Schicht aus einem geeigneten Isoliermaterial sein kann.

Nahe der Stirnfläche 26 trägt der Bezugskörper 20 einen Sekundärfühler 22, der in den gezeichneten Ausführungsbeispielen ein Keramik- oder Platinmeßwiderstand ist, von dem ein Anschlußdraht 32 zur Anschlußseite des Meßfühlers 10 und ein Basisanschluß 34 auf den Bezugskörper 20 führt. Im Beispiel der Figur 1 ist dieser Basisanschluß 34 mit einer eigenen Lötstelle am Bezugskörper 20 festgelegt, während bei den Bauformen nach Fig. 2 und 3 die Festlegung gemeinsam mit dem Bezugspunkt 18 des Verbindungsstücks 16 erfolgt. Man erkennt, daß in diesem Falle nicht nur eine Lötstelle eingespart wird, sondern auch ein noch kleinerer Sekundärfühler 22 verwendet werden kann.

Aus Figur 3 geht ferner hervor, daß zumindest das meßpunktseitige Ende des Bezugskörpers 20 mit einem Schrumpfschlauch 36 überzogen sein kann, der lediglich eine Umfangsöffnung für den Bezugspunkt 18 aufzuweisen braucht und zugleich die Isolierung 24 sichern kann. Es ist auch möglich und vorgesehen, die Isolierung 24 und den Schrumpfschlauch 36 einstückig auszubilden.

Ferner ist im Beispiel der Figur 3 die Fühlerspitze von einer Hülse 40 umschlossen, welche einerseits den Temperaturfühler 12 samt den Leitungen a und b schützt und andererseits zugleich eine Griff-Handhabe bilden kann. Außerdem können die Kupferdrähte (28, 30 in Fig. 1 und 2) durch Litzenanschlüsse 42, 44 ersetzt bzw. fortgesetzt sein, wobei der Litzenanschluß 42 zweckmäßig durch eine weitere Lötstelle 46 mit der Leitung a verbunden ist. Die Hülse 40 kann auch die Lötstelle 46 umschließen und dadurch sichern.

Vor dem Meßpunkt 14 trägt der Meßfühler 10 gemäß Figur 3 eine Kontaktscheibe 38, die sehr dünn sein kann und eine möglichst geringe Wärmekapazität haben soll. Sie dient dazu, die Flächenpressung am Meßobjekt herabzusetzen und gleichmäßiger zu verteilen. Die Hülse 40 kann auch die Kontaktscheibe 38 umschließen bzw. am Rand haltern.

Ein Anwendungsbeispiel ist in Figur 4 veranschaulicht. Man erkennt, daß das meßpunktseitige Ende des Meßfühlers 10 möglichst senkrecht auf die Oberfläche M eines Meßobjekts aufgesetzt wird. Ist dies z.B. die Hautoberfläche, so kann durch mäßigen Andruck des Meßfühlers 10 die Oberfläche M geringfügig eingedrückt werden. Mit gestrichelten Linien ist angedeutet, daß die von der Hülse 40 leicht gespannte Haut durch den Meßpunkt 14 bzw. die Kontaktscheibe 38 ebenfalls geringfügig eingedrückt wird, jedoch mit gleichmäßiger Verteilung der Andruckkraft.

Wesentliche Vorteile der Erfindung beruhen darauf, daß zwischen Meßpunkt 14 und Bezugspunkt 18 lediglich ein gewisses, oft kleines Temperaturgefälle zu messen ist, denn am Bezugskörper 20 wird die Hintergrund-Temperatur durch den Sekundärfühler 22 gleichmäßig erfaßt. Da der Bezugskörper 20 eine verhältnismäßig große, wärmeleitende Masse aufweist, stellt er ein einheitliches "Umgebungsnormal" dar, das überdies für die Aufrechterhaltung des Temperaturgefälles zum Meßpunkt 14 hin sorgt. Weil letzterer außerordentlich klein gestaltet sein kann, sind die übergehenden Wärmemengen extrem gering. Der stationäre oder Beharrungsmeßwert wird daher überaus schnell erreicht, beispielsweise binnen 0,1 bis 0,5s. Die Differentialmessung ergibt also auch eine sehr hohe Ansprechgeschwindigkeit bei zugleich gesteigerter Meßgenauigkeit und erhöhter Reproduzierbarkeit der Meßwerte. Der Fühler 10 ist stabil und kann sehr schlank ausgebildet werden. Seine Handhabung ist bequem und für das Meßobjekt M nicht oder höchstens wenig belastend; jedenfalls ist der erforderliche, spezifische Andruck minimal.

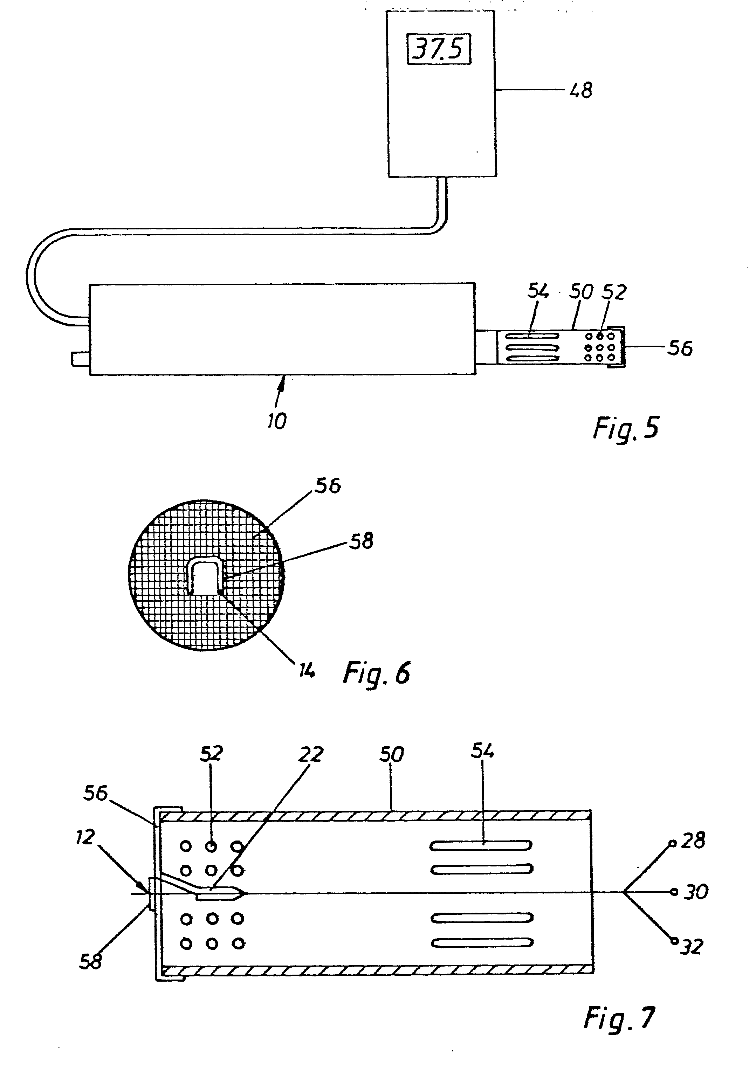

Die in Figur 5 dargestellte Meßeinrichtung besteht aus dem Fühler 10 und einer Anzeigeeinrichtung 48 mit einer Auswertelektronik. Der Meßfühler 10 hat einen Fühlerkopf 50, der durch einen Rohrkörper gebildet ist, welcher in seiner Mantelfläche nahe seines vorderen Endes kleinflächige, runde Durchlässe 52 und im rückwärtigen Bereich großflächige, als Langloch ausgebildete Durchlässe 54 hat. Die vordere Stirnfläche des Fühlerkopfes 50 ist von einem als siebartiges Gitter ausgebildeten Träger 56 abgedeckt, was auch in Figur 6 zu sehen ist.

Die Figur 6 verdeutlicht, daß auf dem Träger 56 eine Schleife 58 aus Thermodraht aufgebracht ist, welche den primären Temperaturfühler 12 bildet.

In Figur 7 ist zu sehen, daß von der Schleife 58 die Thermodrähte über den Sekundärfühler 22 geführt sind. Der Sekundärfühler 22 ist dicht hinter der Schleife 58 im Fühlerkopf 50 im Bereich der runden Durchlässe 52 vorgesehen.

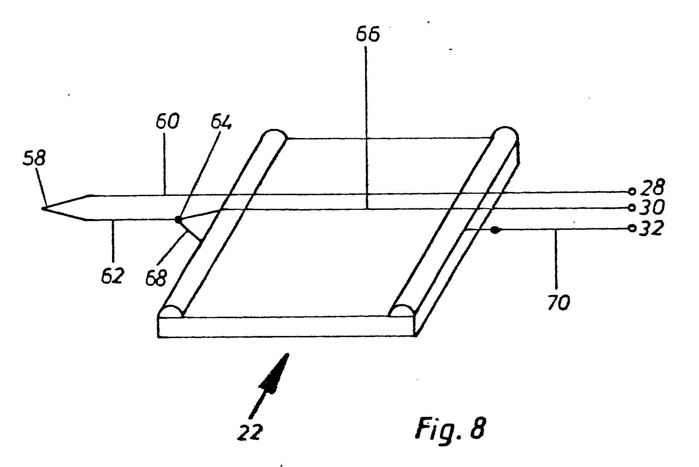

Die Figur 8 verdeutlicht die Schaltung des Sekundärfühlers 22. Zu sehen ist, wie von der Schleife 58 ein aus Kupfer bestehender Thermodraht 60 über den Sekundärfühler 22 hinweggeführt ist. Ein anderer, das Thermoelement bildender Thermodraht 62 aus einer Kupfer-Nickel-Legierung verzweigt sich an einer Lötstelle 64 vor dem Sekundärfühler 22. Von dieser Lötstelle 64 aus ist ein Draht wiederum über den Sekundärfühler 22 hinweggeführt, während ein anderer Draht 68 an einem Ende des Sekundärfühlers 22 angeschlossen ist. Ein anderer Draht 70 ist am anderen Ende des Sekundärfühlers 22 angeschlossen. Die Drähte 60, 66 und 70 bilden an der in der Zeichnung gesehen linken Seite des Sekundärfühlers 22 seine Anschlüsse. Bei dem Sekundärfühler 22 handelt es sich um ein PT 100, welches mit Thermoleitsubstrat vergossen wird.

## Ansprüche

1. Meßfühler für die elektrische Messung von Temperaturen mit einem Temperaturfühler an der Fühlerspitze, dadurch gekennzeichnet, daß dem Temperaturfühler (12) ein Sekundärfühler (22) zur Messung der Hintergrundtemperatur zugeordnet ist.

2. Meßfühler nach Anspruch 1, dadurch gekennzeichnet , daß der Temperaturfühler (12) mit einer ihn tragenden Isolierung (24) und dem Sekundärfühler (22) eine Baueinheit bildet.

3. Meßfühler nach den Ansprüchen 1 oder 2, dadurch gekennzeichnet, daß der Sekundärfühler (22) auf oder in einem Bezugskörper (20) angeordnet ist, der mit der Isolierung (24) und dem Temperaturfühler (12) fest verbunden ist.

4. Meßfühler nach einem oder mehreren der vorangehenden Ansprüche, dadurch gekennzeichnet, daß der Bezugskörper (20) als massiver Wärmeleitkörper ausgebildet ist.

5. Meßfühler nach einem oder mehreren der vorangehenden Ansprüche, dadurch gekennzeichnet, daß der Sekundärfühler (22) benachbart zur Stirnfläche (26) des Bezugskörpers (20) an oder in ihm wärmeleitend verankert ist.

6. Meßfühler nach einem oder mehreren der vorangehenden Ansprüche, dadurch gekennzeichnet , daß der Temperaturfühler (12) ein Thermoelement ist, dessen eine Lötstelle (Meßpunkt 14) an der Fühlerspitze sitzt und dessen andere Lötstelle (Bezugspunkt 18) in wärmeleitender Verbindung mit dem Bezugskörper (20) angeordnet ist.

7. Meßfühler nach einem oder mehreren der vorangehenden Ansprüche, dadurch gekennzeichnet, daß der Bezugspunkt (18) mit dem Bezugskörper (20) verlötet ist.

8. Meßfühler nach einem oder mehreren der vorangehenden Ansprüche, dadurch gekennzeichnet, daß ein Anschluß (34) des Sekundärfühlers (22) mit dem Bezugskörper (20) verlötet ist, namentlich nahe oder an dem Bezugspunkt (18).

9. Meßfühler nach Anspruch 14, dadurch gekennzeichnet, daß der Isolierdraht ein lackierter Thermodraht ist.

10. Meßfühler nach einem oder mehreren der vorangehenden Ansprüche, dadurch gekennzeichnet, daß an dem der Fühlerspitze entgegengesetzten Ende des aus Kupfer bestehenden Bezugskörpers (20) ein Kupfer-Anschlußdraht (30) angelötet ist.

11. Meßfühler nach einem oder mehreren der vorangehenden Ansprüche, dadurch gekennzeichnet, daß dem Temperaturfühler (12) außen eine von der Hülse (40) gehaltene Kontaktscheibe (38) vorgeordnet ist.

12. Meßfühler nach einem oder mehreren der vorangehenden Ansprüche, dadurch gekennzeichnet, daß der Temperaturfühler (12) eine ein Thermoelement bildende Schleife (58) aus Thermodraht ist, welche zum Kontaktieren einer zu messenden Oberfläche auf einem eine Luftströmung zulassenden Träger (56) angeordnet ist.

13. Meßfühler nach Anspruch 1, dadurch gekennzeichnet, daß der Träger (56) ein Gitter aus elektrisch isolierendem Material ist, welches die vordere Stirnfläche eines einen Fühlerkopf (50) bildenden Rohrkörpers abdeckt, der Durchlässe (52, 54) in seiner Mantelfläche hat.

14. Meßfühler nach den Ansprüchen 1 und 2, dadurch gekennzeichnet, daß der Sekundärfühler im Fühlerkopf (50) unmittelbar hinter dem Träger (56) angeordnet ist.

15. Meßfühler nach einem oder mehreren der vorangehenden Ansprüche, dadurch gekennzeichnet, daß der Sekundärfühler (22) ein PT 100-Element ist, welches an einer Seite mit einem der beiden Thermodrähte (62) des als Thermoelement ausgebildeten Temperaturfühlers (12) und an seiner anderen Seite mit einem zu einer Auswertelektronik führenden Draht (70) verbunden ist.

16. Meßfühler nach einem oder mehreren der vorangehenden Ansprüche, dadurch gekennzeichnet, daß der Fühlerkopf (50) im Bereich des Sekundärfühlers (22) in seiner Mantelfläche mehrere kleinflächige Durchlässe (52) und im rückwärtigen Bereich mehrere großflächige Durchlässe (54) in Form von Langlöchern aufweist.

Fig.1

Fig. 2

Fig. 3

Fig. 4

0 262 308

37.5

— 48

54  50  52

56

10

Fig. 5

56

58

14   Fig. 6

52   22   50   54

56

12

58

28

30

32

Fig. 7

Fig. 8